# EUROPEAN PATENT SPECIFICATION

(11) **EP 0 689 922 B1**
(45) Date of publication and mention of the grant of the patent: **02.05.2001**
(21) Application number: 95109543.9
(22) Date of filing: 20.06.1995
(51) Int. Cl.: B29C 45/27

(54) **Injection molding nozzle with helical cooling conduit**
Spritzgiessdüse mit schraubenförmiger Kühlleitung
Buse d'injection avec conduit de refroidissement hélicoidal

(30) Priority: 30.06.1994 CA 2127210
(43) Date of publication of application: 03.01.1996
(73) Proprietor: Gellert, Jobst Ulrich, Georgetown Ontario L7G 2X1 (CA)
(72) Inventor: Gellert, Jobst Ulrich, Georgetown Ontario L7G 2X1 (CA)
(74) Representative: Grünecker, Kinkeldey, Stockmair & Schwanhäusser Anwaltssozietät

(56) References cited:
- DE-U- 9 110 897
- DE-U- 9 404 617
- US-A- 4 260 348
- US-A- 5 096 410
- KAUTSCHUK UND GUMMI - KUNSTSTOFFE, vol. 43, no. 9, September 1990 HEIDELBERG DE, pages 810-815, XP 000179480 MASBERG 'Die Kaltkanaltechnik in der Elastomerverarbeitung'
- KAUTSCHUK UND GUMMI - KUNSTSTOFFE, vol. 40, no. 9, September 1987 HEIDELBERG DE, pages 829-836, GRAF 'Austriebfreie Herstellung von Gummiformteilen auf Spritzgiessmaschinen'

## Description

This invention relates to an injection molding nozzle according to the preamble of independent claim 1 and to a method of making an injection nozzle according to the preamble of independent claim 7.

Modern hot runner injection molding systems require a number of nozzles through which melt flows from a melt distribution manifold to the different gates. Nozzles which are heated by an integral electrical heating element with a helical portion encircling a central melt channel to heat the melt flowing through the channel are well known for molding thermoplastic materials. An example of such a heated nozzle is shown in the applicant's U.S. Patent Number 4,403,405 which issued September 13, 1983.

From said document US-A-4 403 405 an electrically heated injection molding sprue bushing and the method for making the same is known. A bushing comprises a hollow elongated inner core portion, an outer sleeve portion and a highly conductive portion located therebetween. A central runner passage extends through the inner core portion. A helical portion of an electrical heating element is formed by helically winding a wire means, which is of the two-core type with a metal sheath formed of Inconel or stainless steel and a nickel chromium alloy resistance wire enclosed in a refactory powder electrical insulating material, such as compacted magnesium oxide powder. Said helical portion is embedded within the highly conductive portion made of beryllium copper alloy. The above-mentioned part of the bushing is basically made by inserting the helical portion into a space between the inner core portion and the outer sleeve portion, and filling said space between the inner core portion and the outer sleeve portion and around the helical portion with beryllium copper alloy by a brazing process

From prior art document EP-A-0 361 043 an integral sprue elongated injection molding nozzle and a method of making it is known. Said nozzle has a center portion provided with a spiral channel formed on an outer surface thereof. An electrical heating element is wound within the spiral channel and brazed therein. The heating element brazed within the channel is covered by a protective nickel coating to provide a heated molding nozzle.

From US-A-5 180 594 a sprue bushing which has an improved heated transfer and a method of making the same is known. Said bushing comprises an inner core member and an outer side wall. During manufacturing of the bushing an annular cavity is provided between the inner core member and the outer core member. The electrical heating elements are slip-fit into the annular cavity, wherein a highly conductive material, such as copper or beryllium copper allow is placed between the inner core and the heating elements. The highly conductive material is a slip-fit sleeve or is cast in. Furthermore, a refactory material like magnesium oxide is filled in a gap between the heating elements and the outer side wall.

However, when molding materials such as two-component silicon rubber or other liquid molding materials which are thermosetting rather than thermoplastic and have cool runners rather than hot runners, the two components are mixed just before injection into a cavity in a hot mold. This requires that the mold must be heated rather than cooled and the molding material must be retained well below its cross-linking temperature as it flows through the nozzle. An example of apparatus for molding thermosetting materials is seen in DE-A-2341589 to Delbrouck which was laid-open August 17, 1973. However, in that case, the liquid molding material flows around an elongated probe through which cooling water flows. In other words, the liquid molding material flows between the cooled probe and the heated mold which has the disadvantage that the temperature of the liquid molding material is not very uniform because it is cooler near the inside and hotter near the outside.

From prior art document DE-U-9 110 897 a cold runner injection nozzle is known. Said injection molding nozzle comprises a rear and a front end and a liquid molding material channel extending therethrough to convey liquid molding material forwardly towards at least one gate. Said gate extends through a heated mold to a cavity. The liquid molding material channel extends through the nozzle from a central inlet at the rear end and the nozzle has a cooling fluid conduit with an inlet portion, an outlet portion and a helical portion. The helical portion extends concentrically around at least a portion of the liquid molding material channel, whereby cooling fluid circulating through the cooling fluid conduit cools the liquid molding material flowing frontwardly through the liquid molding material channel. Said helical portion is formed by an inner part of an elongated central portion of the nozzle, wherein said inner part comprises the spiral groove and an outer sleeve is fitted on said inner part. In particular, said inner part is a cylindrical core member provided with said helical groove at the outer circumferential surface thereof. The outer sleeve surrounding said core member is screwed into a head means of the nozzle. Said sleeve and said head means are snugly fitted on the inner core member surrounding the same to constitute the cooling channel. Thus, the core member, the sleeve and the head means can be separated from each other in case of maintenance.

From the Journal, Kautschuk + Gummi Kunststoffe, Volume 43, No. 9, Sept. 1999, pages 810 to 815, several embodiments of a cool injection molding nozzle are known.
According to one of said embodiments, the related nozzle comprises a main body having a molding channel extending from a rear end to a front end of said main body to convey molding material to a gate. Said gate is located in a heated portion of the mold defining a molding cavity. A cooling means is helically provided at an outer portion of said main body around an axial direction thereof. That outer portion of the main body and the related cooling means are covered by a cover means or the like.

According to a further embodiment known from said Journal, the related nozzle comprises a main body having a molding channel extending from a rear end to a front end of said main body to convey molding material to the front portion thereof. An outer sleeve means is provided to surround said main body in an axial direction thereof to provide a cooling passage means between an outer surface of the main body and an inner surface of the outer sleeve means. Said passage means also substantially extends in the axial direction of the main body. Furthermore, sealing means, for example O-rings or the like are provided between the main body and the outer sleeve means at the rear end and the front end thereof respectively in order to prevent leakage of the cooling medium flowing through said passage means.

Moreover, from the Journal, Kautschuk + Gummi Kunststoffe, Volume 40, No. 9, Sept. 1987, pages 829 to 836, a cooled injection molding nozzle is known. Said nozzle also comprises a main body having a molding channel extending from a rear end to a front end of said main body to convey molding material to said front end. The cooling passage means is provided at an outer portion of said main body. Said cooling passage means is helically shaped, wherein a separate outer sleeve means is provided to cover said outer portion and said passage means.

It is an objective of the present invention to provide an injection molding nozzle according to the preamble of independent claim 1 and a method of making an injection nozzle according to the preamble of independent claim 7, wherein the making of said nozzle can be facilitated and the leakage of cooling fluid is surely prevented and a sufficient thermal conductivity is provided.

According to the apparatus aspect of the present invention, said objective is solved by an injection molding nozzle according to the preamble of independent claim 1, wherein the outer sleeve is brazed on the inner part so as to provide an integral cooling fluid conduit in the nozzle.

According to the method aspect of the present invention, said objective is solved by a method of making an injection nozzle according to the preamble of independent claim 7, wherein the joints between said inner part and said outer sleeve are connected by vacuum-brazing.

Preferred embodiments of the present invention are laid down in the dependent claims.

Hereinafter, the present invention is illustrated and explained in further details by means of a preferred embodiment in conjunction with the accompanying drawings, wherein:
Figure 1 is a partial sectional view of a portion of a multi-cavity thermosetting injection molding system showing a nozzle according to a preferred embodiment,
   and
Figure 2 is a sectional view along line 2-2 in Figure 1.

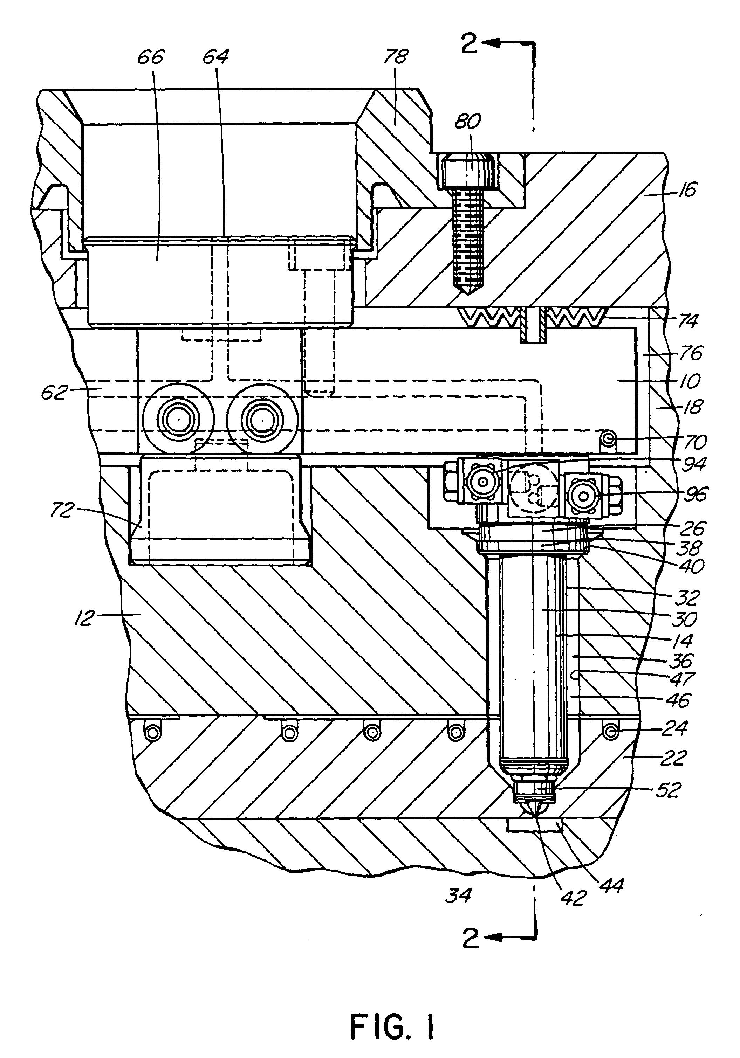

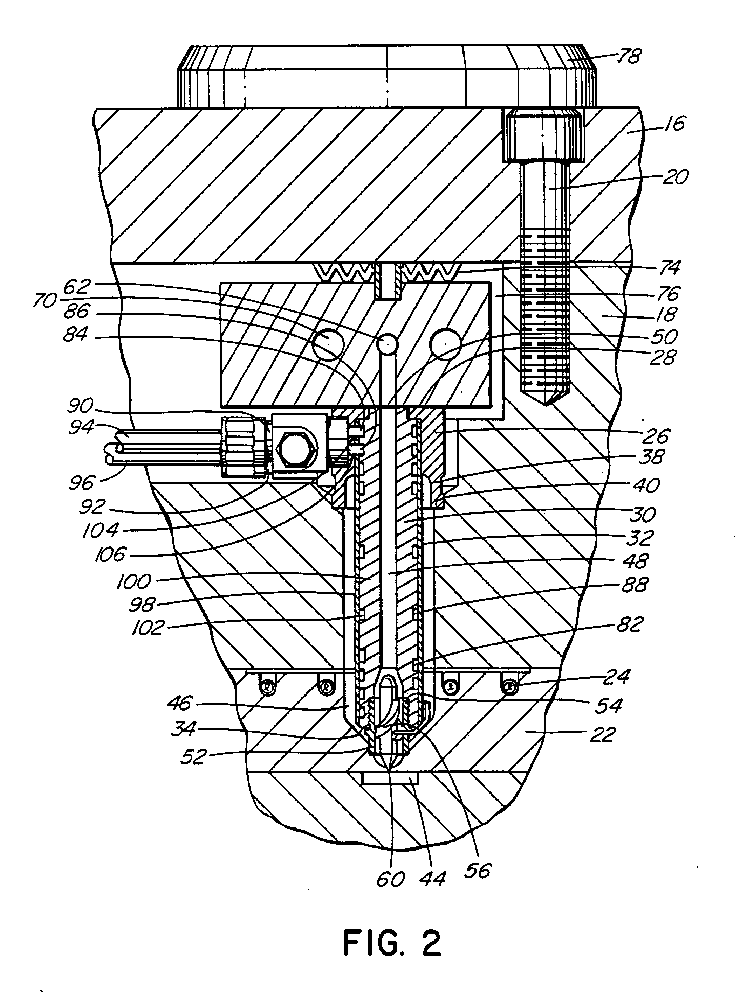

Reference is made to both Figures 1 and 2 which show a portion of a multi-cavity injection molding system or apparatus having a manifold 10 seated in a mold 12 to distribute liquid molding material between a number of nozzles 14 (only one of which is shown). While the mold 12 usually has a greater number of plates depending on the application, in this case only a back plate 16 secured to a manifold retainer plate 18 by bolts 20 and a cavity plate 22 are shown for ease of illustration. The mold 12 is heated by an electrical heating element 24 integrally embedded in the cavity plate 22. Each nozzle 14 has an outer collar portion 26 which extends from the rear end 28 around a smaller diameter central portion 30 with a cylindrical outer surface 32 extending to the front end 34. The nozzle 14 is seated in a well 36 in the mold 12 by a circular locating flange 38 which extends from the outer collar portion 26 and sits on a circular shoulder 40 in the well 36 to accurately locate the nozzle 14 in alignment with a gate 42 extending through the cavity plate 22 to a cavity 44. Thus, an insulative air space 46 is provided between the central portion 30 of the nozzle 14 and the surrounding inner surface 47 of the well 36. As seen in Figure 2, in this embodiment, the nozzle 14 has a central bore or channel 48 which extends therethrough from an inlet 50 at the rear end 28 in alignment with a torpedo 52 which is securely screwed into a threaded seat 54 in the front end 34. The torpedo 52 has a pair of spiral blades 56 extending around a central shaft 58 with a pointed front tip 60 extending into the gate 42. In other embodiments, a nozzle seal or gate insert can be used to bridge the insulative air space 46, the central bore or channel 48 can branch outwardly near the front end 34 of the nozzle 14 to several spaced edge gates or the apparatus can be valve gated with a reciprocating valve member to open and close the gate.

A liquid molding material passage 62 branches in the distribution manifold 10 to convey pressurized liquid molding material received from a molding machine (not shown) at an inlet 64 in a manifold extension 66 through the central bore 48 in each nozzle 14 to the cavities 44. The distribution manifold 10 is cooled below the cross-linking temperature of the liquid molding material by pumping cooling water or other suitable cooling fluid through cooling fluid conduits 70. The liquid molding material distribution manifold 10 is mounted between the back plate 16 and the manifold retaining plate 18 by a central locating ring 72 seated in the manifold retaining plate 18 and several insulative and resilient spacer members 74 with an insulative air space 76 between the cooled manifold 10 and the surrounding heated mold 12. As can be seen, the manifold 10 is located laterally by a locating collar 78 attached to the back plate 16 by bolts 80.

Reference is now made particularly to Figure 2 in describing the structure of the nozzle 14 according to a preferred embodiment. The nozzle 14 has an integral cooling fluid conduit 82 with an inlet portion 84, an outlet portion 86, and a helical portion 88. As can be seen, the inlet and outlet portions 84, 86 of the cooling fluid conduit 82 each extend radially through the outer collar portion 26 of the nozzle 14 to threaded connectors 90, 92 to respectively receive supply and return lines 94, 96 for cooling water or other suitable cooling fluid. The helical portion 88 of the cooling fluid channel 82 extends into the central portion 30 of the nozzle 14 concentrically around the central liquid molding material channel 48. As described below, the helical portion 88 of the cooling fluid channel 82 is integrally embedded in the nozzle 14 with predetermined distances between it and the central liquid molding material channel 48 and the outer surface 32 of the central portion 30 of the nozzle 14.

The method of making the nozzle 14 will now be described with particular reference to Figure 2. The components are made and assembled as shown, with the elongated central portion 30 having a stainless steel outer sleeve 98 which is mounted over an inner part 100 in which a spiral groove 102 has been machined to form the helical portion 88 of the cooling conduit 82. Two pieces 104, 106 of stainless steel tubing are mounted to extend from opposite ends of the spiral groove 100 radially out through the outer steel collar portion 26 to the connectors 90, 92 to form the inlet and outlet portions 84, 86 of the cooling conduit 82. During assembly, nickel alloy brazing paste is applied along the joins between the components and they are then gradually heated in a vacuum furnace to a temperature of approximately 1052 C° (1925°F). which is above the melting temperature of the nickel alloy brazing paste. As the furnace is heated, it is evacuated to a relatively high vacuum to remove substantially all of the oxygen and then partially backfilled with an inert gas such as argon or nitrogen. When the melting point of the brazing paste is reached, it melts and flows between the abutting surfaces of the components by capillary action to integrally braze them together to form the nozzle 14. Brazing them together in a vacuum furnace provides a metallurgical bonding of the components together which prevents leakage of cooling fluid from the cooling conduit 82 and provides optimal thermal conductivity.

In use, the injection molding system is assembled as shown. While only a single cavity 44 has been shown for ease of illustration, it will be appreciated that the liquid molding material distribution manifold 10 normally has many more liquid molding material passage branches extending to numerous cavities 44 depending on the application. Cooling water is circulated through the cooling conduit 70 in the distribution manifold 10 and through the cooling conduits 82 in each of the nozzles 14 to cool them to a predetermined temperature below the cross-linking temperature of the molding material. Electrical power is applied to the heating element 24 in the cavity plate 22 to heat the mold 12 around the cavity 44 to a predetermined temperature above the cross-linking temperature of the molding material. Pressurized liquid molding material from a molding machine (not shown) is then injected into the molding material passage 62 through the central inlet 64 according to a predetermined cycle. The pressurized liquid molding material flows through the central molding material bore 48 of each nozzle 14, between the spiral blades 56 of the torpedo 52, and through the gate 42 to the cavity 44. The flow of molding material between the fixed spiral blades 56 of the torpedo 52 imparts a swirling motion to the molding material which is accelerated as the molding material approaches the gate 42 and results in the molding material flowing outwardly in the cavity 44 near the gate 42 with a curving motion. This avoids unidirectional molecular orientation of the molding material, at least adjacent the gate 42, and provides a stronger product in the gate area. After the cavities 44 are filled, injection pressure is held momentarily to pack and then released. After a solidification period, the mold is opened to eject the molded products. After ejection, the mold is closed and injection pressure is reapplied to refill the cavities 44. This injection cycle is continuously repeated with the frequency dependent on the size and shape of the cavities 44 and the type of material being molded.

While the description of the cold runner injection molding nozzle according to the invention has been given with respect to a preferred embodiment, it will be evident that various other modifications are possible without departing from the scope of the invention as understood by those skilled in the art and as defined in the following claims.

## Claims

1. An injection molding nozzle (14) having a rear end (28), a front end (34) and a liquid molding material channel (48) extending therethrough to convey liquid molding material frontwardly towards at least one gate, each at least one gate extending through a heated mold to a cavity, the liquid molding material channel (48) extends through the nozzle (14) from a central inlet (50) at the rear end (28), and the nozzle (14) has a cooling fluid conduit (82) with an inlet portion (84), an outlet portion (86) and a helical portion (88), the helical portion (88) extending concentrically around at least a portion of the liquid molding material channel (48) whereby cooling fluid circulating through the cooling fluid conduit (82) cools the liquid molding material flowing frontwardly through the liquid molding material channel (48), and wherein the helical portion (88) is formed by an inner part (100) of an elongated central portion (30) of the nozzle (14), said inner part having a spiral groove (102), and by an outer sleeve (98) fitted on the inner part (100), **characterized in that** the outer sleeve (98) is brazed on the inner part (100) so as to provide an integral cooling fluid conduit (82) in the nozzle (14).

2. An injection molding nozzle according to claim 1, **characterized that** the elongated central portion (30) is provided with a generally cylindrical outer surface (32) and an outer collar portion (26) extending around the central portion (30) adjacent the rear end (28), and the nozzle (14) is seated in a well (36) in said heated mold (12) with an insulative air space (46) extending between the outer surface (32) of the central portion (30) of the nozzle (14) and a surrounding inner surface (47) of the well (36).

3. An injection molding nozzle according to claim 2, **characterized in that** the helical portion (88) of the cooling fluid conduit (82) extends along the central portion (30) of the nozzle (14) and the inlet portion (84) and the outlet portion (86) of the cooling fluid conduit (82) extend from the helical portion (88) of the cooling fluid conduit (82) radially outward through the outer collar portion (26) of the nozzle (14).

4. An injection molding nozzle according to claim 2 or 3, **characterized in that** the liquid molding material channel (48) extends centrally through the nozzle (14) from the rear end (28) to the front end (34), and the helical portion (88) of the cooling fluid conduit (82) is spaced with predetermined distances between the central liquid molding material channel (48) and the outer surface (32) of the central portion (30) of the nozzle (14).

5. An injection molding nozzle according to one of the claims 2 to 4,
**characterized in that** the inlet portion (84) of the cooling fluid conduit (82) is a first integral tube extending inwardly through the outer collar portion (26) of the nozzle (14) to the helical portion (88) of the fluid conduit (82), and having a first outer connection to be connected to a cooling fluid supply line (94).

6. An injection molding nozzle according to one of the claims 2 to 5,
**characterized in that** the outlet portion (86) of the cooling fluid conduit (82) is a second integral tube extending outwardly through the outer collar portion (26) of the nozzle (14) from the helical portion (88) of the fluid conduit (82), and having a second outer connection to be connected to a cooling fluid return line (96).

7. Method of making an injection nozzle (14) having a helical cooling conduit (88), said method comprising the steps:
(a) providing an inner part (100) of an elongated central portion (30) of the nozzle (14) with a spiral groove (102),
(b) mounting an outer sleeve (98) over said inner part (100),
**characterized in that**
(c) the joins between said inner part (100) and said outer sleeve (98) are connected by vacuum-brazing.

## Patentansprüche

1. Eine Spritzgießdüse (14) mit einem hinteren Ende (28), einem vorderen Ende (34) und einem Kanal (48) für flüssiges Schmelzematerial, der sich durch diese hindurch erstreckt, um flüssiges Schmelzematerial nach vom zu zumindest einem Anschnitt zu befördern, wobei jeder dieses zumindest einen Anschnittes sich durch eine beheizte Gießform zu einem Formhohlraum erstreckt, der Kanal (48) für das flüssige Schmelzematerial erstreckt sich durch die Düse (14) von einem zentralen Einlaß (50) an dem hinteren Ende (28), und die Düse (14) hat eine Kühlfluidleitung (82) mit einem Einlaßabschnitt (84), einen Auslaßabschnitt (86) und einen schraubenförmigen Abschnitt (88), wobei der schraubenlinienförmige Abschnitt (88) sich konzentrisch um zumindest einen Abschnitt des Kanals (48) für das flüssige Schmelzematerial erstreckt, wodurch das Kühlfluid, das durch die Kühlfluidleitung (82) strömt, das flüssige Schmelzematerial, das nach vom durch den Kanal (48) für flüssiges Schmelzematerial strömt, kühlt, und wobei der schraubenlinienförmige Abschnitt (88) durch einen inneren Teil (100) eines langgestreckten Mittelabschnitt (30) der Düse (14) gebildet wird, dieser innere Teil eine spiralförmige Nut (102) hat, und durch eine äußere Hülse (98) , passend auf den inneren Teil (100) aufgesetzt, **dadurch gekennzeichnet, daß** die äußere Hülse (98) auf dem inneren Teil (100) hartaufgelöted ist, um so eine einstückige Kühlfluidleitung (82) in der Düse (14) zu schaffen.

2. Eine Spritzgießdüse nach Anspruch 1, **dadurch gekennzeichnet, daß** der langgestreckte Mittlelabschnitt (30) mit einer im wesentlichen zylindrischen Außenoberfläche (32) und einem äußeren Kragenabschnitt (26) versehen ist, der sich benachbart zu den hinteren Endes (28) um den Mittelabschnitt (30) herum erstreckt, und die Düse (14) in einer Bohrung (36) in der beheizten Gießform (12) sitzt, mit einem isolierenden Luftzwischenraum (46), der sich zwischen der Außenoberfläche (32) des Mittelabschnittes (30) der Düse (14) und einer umgebenden Innenoberfläche (47) der Bohrung (36) erstreckt.

3. Eine Spritzgießdüse nach Anspruch 2, **dadurch gekennzeichnet, daß** sich der schraubenlinienförmige Abschnitt (88) der Kühlfluidleitung (82) entlang des Mittelabschnittes (30) der Düse (14) erstreckt und der Einlaßabschnitt (84) und der Auslaßabschnitt (86) der Kühlfluidleitung (82) sich von dem schraubenlinienförmigen Abschnitt (88) der Kühlfluidleitung (82) radial nach außen durch den äußeren Kragenbereich (26) der Düse (14) erstrecken.

4. Eine Spritzgießdüse nach den Ansprüchen 2 oder 3, **dadurch gekennzeichnet, daß** der Kanal (48) für das flüssige Schmelzematerial sich zentral durch die Düse (14) von dem hinteren Ende (28) zu dem vorderen Ende (34) erstreckt, und der schraubenlinienförmige Abschnitt (88) der Kühlfluidleitung (82) mit vorbestimmten Abständen zwischen dem zentralen Kanal (48) für das flüssige Schmelzematerial und der Außenoberfläche (32) des Mittelabschnittes (30) der Düse (14) beabstandet ist.

5. Eine Spritzgießdüse nach den Ansprüchen 2 bis 4, **dadurch gekennzeichnet, daß** der Einlaßabschnitt (84) der Kühlfluidleitung (82) ein erstes einstückiges Rohr ist, das sich durch den äußeren Kragenabschnitt (26) der Düse (14) zu dem schraubenlinienförmigen Abschnitt (88) der Kühlfluidleitung (82) nach innen erstreckt und eine erste äußere Verbindung (94) besitzt, die mit einer Kühlfluid-Zuführungsleitung verbunden werden soll.

6. Eine Spritzgießßdüse nach einem der Ansprüchen 2 bis 5, **dadurch gekennzeichnet, daß** der Auslaßabschnitt (86) der Kühlfluidleitung (82) ein zweites einstückiges Rohr ist, das sich von dem schraubenlinienförmigen Abschnitt (88) der Kühlfluidleitung (82) durch den äußeren Kragenabschnitt (26) der Düse (14) nach außen erstreckt und eine zweite äußere Verbindung (96) besitzt, die mit einer Kuhlfluid-Rückführungsleitung verbunden werden soll.

7. Verfahren zur Herstellung einer Spritzgießdüse (14), die eine schraubenlinienförmige Kühlfluidleitung (88) hat, das Verfahren weist folgende Schritte auf:
(a) Versehen eines inneren Teiles (100) eines langgestreckten Mittelabschnittes (30) der Düse (14) mit einer spiralförmigen Nut (102),
(b) Montieren einer Hülse (98) über das innere Teil (100),
**dadurch gekennzeichnet, daß**
(c) die Verbindungen zwischen dem inneren Teil (100) und der äußeren Hülse (98) durch Vakuum-Hartlöten verbunden sind.

## Revendications

1. Buse de moulage par injection (14) comportant une extrémité arrière (28), une extrémité avant (34) et un canal d'écoulement pour matériau de moulage liquide (48) s'étendant au travers de celle-ci afin de faire passer un matériau de moulage liquide vers l'avant jusqu'à au moins une entrée, chaque au moins une entrée s'étendant au travers d'un moule chauffé jusqu'à une cavité, le canal d'écoulement pour matériau de moulage liquide (48) s'étend au travers de la buse (14) depuis une admission centrale (50) située à l'extrémité arrière (28), et la buse (14) comporte un conduit pour fluide de refroidissement (82) comportant une partie d'admission (84), une partie de sortie (86) et une partie hélicoïdale (88), la partie hélicoïdale (88) s'étendant de manière concentrique autour d'au moins une partie du canal d'écoulement pour matériau de moulage liquide (48), ce par quoi le fluide de refroidissement circulant dans le conduit pour fluide de refroidissement (82) refroidit le matériau de moulage liquide qui s'écoule vers l'avant par le canal d'écoulement pour matériau de moulage liquide (48), et dans laquelle la partie hélicoïdale (88) est formée par une partie intérieure (100) d'une partie centrale allongée (30) de la buse (14), ladite partie intérieure comportant une gorge en spirale (102), et par un manchon extérieur (98) ajusté sur la partie intérieure (100), caractérisée en ce que le manchon extérieur (98) est brasé sur la partie intérieure (100) de manière à fournir un conduit pour fluide de refroidissement (82) intégré dans la buse (14).

2. Buse de moulage par injection selon la revendication 1, caractérisée en ce que la partie centrale allongée (30) comporte une surface extérieure de forme générale cylindrique (32) et une partie de manchon extérieur (26) s'étendant autour de la partie centrale (30) à proximité de l'extrémité arrière (28), et en ce que la buse (14) repose dans un puits (36) aménagé dans ledit moule chauffé (12), un espace d'air d'isolation (46) s'étendant entre la surface extérieure (32) de la partie centrale (30) de la buse (14) et une surface intérieure de confinement (47) du puits (36).

3. Buse de moulage par injection selon la revendication 2, caractérisée en ce que la partie hélicoïdale (88) du conduit pour fluide de refroidissement (82) s'étend le long de la partie centrale (30) de la buse (14), et en ce que la partie d'admission (84) et la partie de sortie (86) du conduit pour fluide de refroidissement (82) s'étendent de manière radiale à partir de la partie hélicoïdale (88) vers l'extérieur au travers de la partie de manchon extérieure (26) de la buse (14).

4. Buse de moulage par injection selon les revendications 2 ou 3, caractérisée en ce que le canal d'écoulement pour matériau de moulage liquide (48) s'étend de manière centrale au travers de la buse (14) depuis l'extrémité arrière (28) jusqu'à l'extrémité avant (34), et en ce que la partie hélicoïdale (88) du conduit pour fluide de refroidissement (82) est séparée de distances prédéterminées du canal central d'écoulement pour matériau de moulage liquide (48) et de la surface extérieure (32) de la partie centrale (30) de la buse (14).

5. Buse de moulage par injection selon l'une des revendications 2 à 4, caractérisée en ce que la partie d'admission (84) du conduit pour fluide de refroidissement (82) est un premier tube intégré s'étendant vers l'intérieur au travers de la partie de manchon extérieur (26) de la buse (14) jusqu'à la partie hélicoïdale (88) du conduit pour fluide (82), et comportant une première connexion extérieure devant être connectée à une conduite d'alimentation en fluide de refroidissement (94).

6. Buse de moulage par injection selon l'une des revendications 2 à 5, caractérisée en ce que la partie de sortie (86) du conduit pour fluide de refroidissement (82) est un second tube intégré s'étendant vers l'extérieur au travers de la partie de manchon extérieur (26) de la buse (14) à partir de la partie hélicoïdale (88) du conduit pour fluide (82), et comportant une seconde connexion extérieure devant être connectée à une conduite de retour de fluide de refroidissement (96).

7. Procédé de fabrication d'une buse d'injection (14) comportant un conduit pour fluide de refroidissement hélicoïdal (88), ledit procédé comprenant les étapes de :
(a) formation d'une partie intérieure (100) d'une partie centrale allongée (30) de la buse (14) et comportant une gorge en spirale (102) ;
(b) montage d'un manchon extérieur (98) sur ladite partie intérieure (100) ;
caractérisé en ce que
(c) les connexions entre ladite partie intérieure (100) et ledit manchon extérieur (26) sont réalisées par brasage sous vide.
